# EUROPEAN PATENT APPLICATION

(11) **EP 2 765 114 A1**
(43) Date of publication of application: **13.08.2014**
(21) Application number: 14150786.3
(22) Date of filing: 10.01.2014
(51) Int. Cl.: B67B 7/86, F16K 24/02, F16K 31/52, B67D 3/04, B67B 7/00, B67D 7/02

(54) **Dosage valve for transferring liquids with increased practicality of use**

(30) Priority: 12.02.2013 IT MO20130032
(71) Applicant: Polmac S.R.L., 41037 Mirandola (MO) (IT)
(72) Inventor: Pollastri, Gianfranco, 41037 Mirandola MO (IT)
(74) Representative: Modiano, Micaela Nadia

(57) **Abstract**

A dosage valve (1) for transferring liquids with increased practicality of use, which comprises a main body (2) that defines a duct (3) for the passage of a liquid to be transferred between a first opening (4), intended to be connected with a fluid connection to the mouth of a first tank for the storage of the liquid and a second opening (5) intended to be connected with a fluid connection to the mouth of a second tank into which the liquid is to be transferred.

The valve (1) further comprises a first flow control element (14) arranged so that it can move along the passage duct (3) between an open configuration and a closed configuration in which it allows and interrupts, respectively, the connection between the first and second openings and first means for actuation (15) of the movement of the first flow control element (14) between such open and closed configurations.

The valve (1) comprises, further, an element (16) for piercing a protective film applied on the mouth of the first tank, which is supported by the main body (2) proximate to the first opening (4) and can move along the passage duct (3) between an inactive configuration, in which it is accommodated along the duct, and an active configuration, in which it protrudes at least partially from the first opening (4), and second means for actuation (17) of the movement of the piercing element (16) between such inactive and active configurations.

The first and second actuation means (15, 17) are integrated in a single element (18) for rotational actuation about a rotation axis (A) that is transverse to the extension of the passage duct (3) of a cam (19) that is supported by the main body (2) within the duct and is coupled to a tappet (20) that supports the first flow control element (14) and the piercing element (16). Such tappet (20) can move alternately along the passage duct (3) between a first position, in which the piercing element (16) is in the active configuration and the first flow control element (14) is in the open configuration, and a second position, in which the piercing element (16) is in the inactive configuration and the first flow control element (14) is in the closed configuration.

## Description

The present invention relates to a dosage valve for transferring liquids with increased practicality of use.

Dosing valves are known which are used for transferring liquids from one container to another, generally smaller than the first, while preventing any outward dispersion of liquid.

Such valves are particularly useful for transferring chemical liquids which may be harmful to the operators and/or to the surrounding environment in the event of contamination, such as for example disinfestants, fungicides and plant protection products used in agriculture.

Such products are usually supplied to users in tanks from which, in order to be used, an amount of product must be transferred into tanks of equipment for the distribution thereof.

To this end dosing valves have been developed which are interposed between the mouth of the storage tank and the mouth of the destination tank for achieving a controlled flow of product.

The first time a new tank of product is used, a dosage valve is applied to the corresponding mouth and, at the moment of the transfer, the tank is connected to the valve below the tank and the valve is opened for achieving the transfer, by gravity, of the desired quantity of product from the storage tank to the destination tank.

Such valves comprise, essentially, a main body that defines a duct for the passage of the liquid between an intake opening, provided with a first ring coupling to the mouth of the storage tank of the product to be transferred, and a discharge opening, provided with a second ring coupling to the mouth of the tank into which the product is to be transferred, and between them the duct is blocked by flow control elements which can move between an open position and a closed position of flow, the movement of which is actuated by the operator by means of an external control element of the type of a lever, a handle or the like.

In consideration of the fact that storage tanks generally have a protective film that can be perforated on the open mouth, these dosing valves are provided with a system for perforating such film, which comprises a piercing element that is associated with the intake opening and can move alternately between an inactive configuration, in which it is contained completely inside the main body, and an active configuration, in which it is arranged partially protruding from the intake opening so as to achieve the breakage of the film.

Upon first use, once the first ring is tightened on the mouth of the tank, actuation of the movement of the piercing element is achieved by the operator by inducing a rotation of the main body so as to actuate the egress of the piercing element and the consequent breakage of the protective film.

Likewise, such valves are generally equipped with a system for washing the tank once emptied, which makes it possible to recover the product that remains on the walls thereof.

Such washing system comprises an additional opening on the main body, which is connected to a washing duct that passes through the passage duct and ends proximate to the intake opening and is intended to be connected to a source for supplying water for washing, and an element for blocking the washing duct, which can move between an open position and a closed position.

In the open position such blocking element allows the passage of water for washing from the additional opening through the washing duct and into the tank, so as to wash its inner walls thus removing any product that may remain on them.

The washing water mixed with the removed product runs downward through the passage duct into the tank below and can be used.

Actuation of the opening of the blocking element is achieved by the operator by operating an additional control element.

These conventional valves are not devoid of drawbacks among which there is the fact that they need dedicated control elements for the different functions and, in particular, for the opening/closing of the main flow and for the actuation of the perforation of the protective film during first use.

Furthermore, the manoeuvre required for moving the piercing element can be inconvenient for the operators.

Likewise, with the conventional valves an accidental outflow of chemical product may occur through the washing duct if the corresponding blocking element is left in the open position.

The aim of the present invention is to eliminate the above-mentioned drawbacks in the background art by providing a dosage valve for transferring liquids with increased practicality of use which makes it possible to facilitate the use thereof, particularly at the time of application to a new storage tank.

Within this aim, an object of the present invention is to reduce the risk that accidental outflows of chemical product occur through the washing duct.

Last but not least, another object of the present invention is to provide a dosage valve that has simple structure, is easy and practical to implement, safe to use and effective in operation, and relatively low-cost.

This aim and these and other objects that will become more apparent hereinafter are all achieved by the present dosage valve for transferring liquids with increased practicality of use, comprising a main body that defines a duct for the passage of a liquid to be transferred between a first opening, intended to be connected with a fluid connection to the mouth of a first tank for the storage of the liquid and a second opening intended to be connected with a fluid connection to the mouth of a second tank into which said liquid is to be transferred, a first flow control element arranged so that it can move along said passage duct between an open configuration and a closed configuration in whichit allows and interrupts, respectively, the connection between said first and second openings, first means for the actuation of the movement of said first flow control element between said open and closed configurations, an element for piercing a protective film applied on the mouth of said first tank, which is supported by said main body proximate to said first opening and can move along said passage duct between an inactive configuration, in which it is accommodated along said duct, and an active configuration, in which it protrudes at least partially from said first opening, and second means for the actuation of the movement of said piercing element between said inactive and active configurations, characterized in that said first and second actuation means are integrated in a single element for rotational actuation about a rotation axis (A) that is transverse to the extension of said passage duct of a cam that is supported by said main body within said duct and is coupled to a tappet that supports said first flow control element and said piercing element, which can move alternately along said passage duct between a first position, in which said piercing element is in the active configuration and said first flow control element is in the open configuration, and a second position, in which said piercing element is in the inactive configuration and said first flow control element is in the closed configuration.

Further characteristics and advantages of the present invention will become more apparent from the detailed description of a preferred, but not exclusive, embodiment of a dosage valve for transferring liquids with increased practicality of use, which is illustrated for the purposes of nonlimiting example in the accompanying drawings wherein:

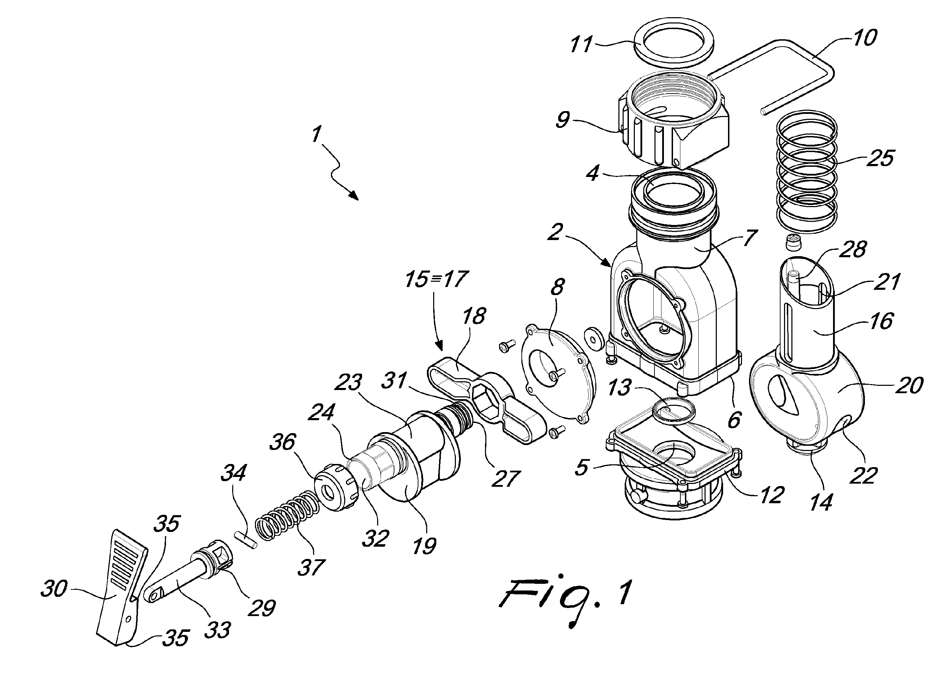

Figure 1 is a schematic perspective exploded view of a dosage valve for transferring liquids with increased practicality of use, according to the invention;
Figure 2 is a schematic front elevation view of the valve, according to the invention, with the tappet in the second position;
Figure 3 is a schematic sectional view along the line III-III in Figure 2;
Figure 4 is a schematic side elevation view of the valve in Figure 2;
Figure 5 is a schematic sectional view along the line V-V in Figure 4;
Figure 6 is a schematic side elevation view of the valve in Figure 2, with the tappet in the first position;
Figure 7 is a schematic sectional view along the line VII-VII in Figure 6;
Figures 8, 9 and 10 are schematic sectional views along the line VIII-VIII in Figure 7 with the second flow control element, respectively, in the closed configuration and in two different open configurations.

With reference to the figures, the reference numeral 1 generally designates a dosage valve for transferring liquids with increased practicality of use.

The valve 1 can be used to transfer a liquid from a first storage container to a second container for use which can have any shape and size (not shown).

Typically the first container is of the type of a commercial tank provided with a mouth that is closed by a removable plug and by a protective film that can be perforated, while the second container is of the type of a tank, also provided with a mouth that is closed by a removable plug, intended to be applied on an apparatus for distributing the liquid.

One application in particular of the valve 1 is for transferring chemical liquids that are hazardous for the operators and/or the surrounding environment, such as fertilizing products, herbicides, fungicides and the like, which are employed in agriculture, but it is also useful for other types of liquids because it prevents the outflow thereof during the transfer.

The valve 1 comprises a main body 2 that defines a duct 3 for the passage of the liquid to be transferred between a first opening 4, intended to be connected with the mouth of the first tank, and a second opening 5, intended to be connected with a fluid connection to the mouth of the second tank.

In the embodiment shown, the supporting body 2 comprises an internally hollow element which is shaped similar to a bottle with an open base 6 that is substantially rectangular in shape and is arranged at the second opening 5, and with a neck 7 that terminates proximate to the first opening 4, and that is provided with an opening on the front wall which is closed by a closure element 8.

The first opening 4 is defined by a ring 9 which is connected to the end of the neck 7 by the interposition of a fork 10 and of a first sealing ring 11.

The ring 9 is intended to be coupled hermetically to the mouth of the first container and has a shape, size and threading which can vary as a function of the type of container in use.

The second opening 5 is defined in a cover 12 which is applied on the base 6 of the main body 2 and is provided with an end for coupling to the mouth of the second container.

At the second opening 5 there is a second sealing ring 13.

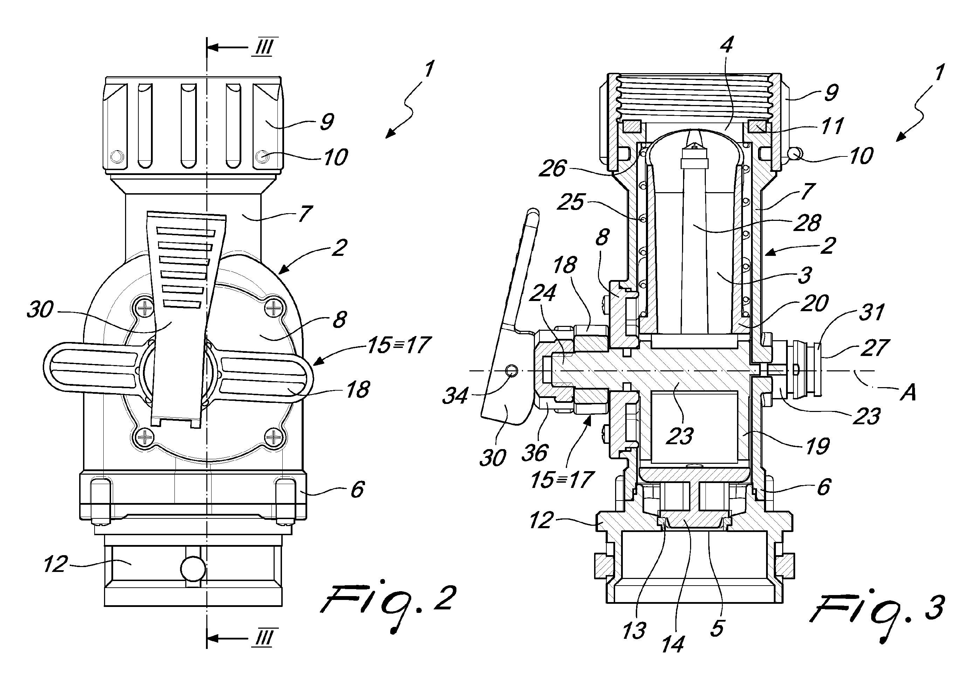

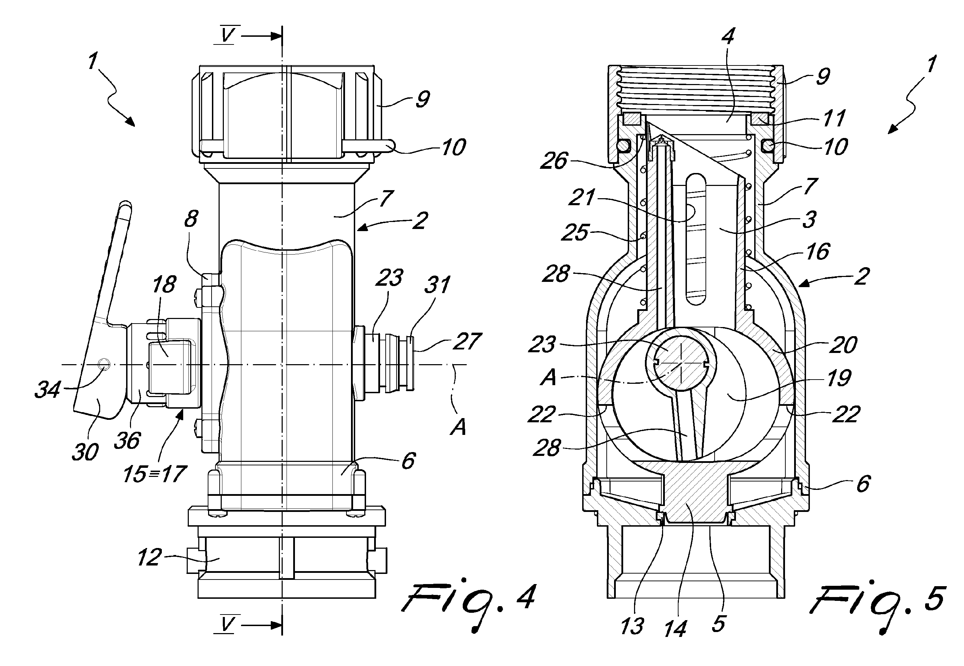

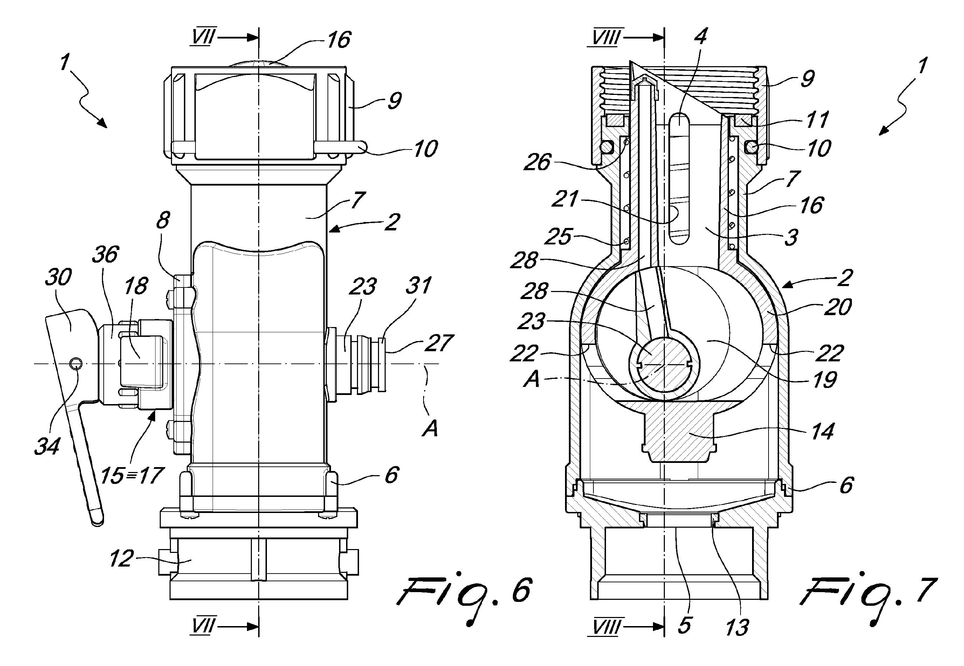

The valve 1 has, in addition, a first flow control element 14 arranged so that it can move along the passage duct 3 between an open configuration (Figures 6-10) and a closed configuration (Figures 2-5) in which it allows and interrupts, respectively, the communication between the openings 4 and 5, and first means for actuation 15 of the movement of the first flow control element 14 between the aforementioned configurations, which are associated externally with the main body 2 and are accessible to an operator.

The valve 1, furthermore, is provided with an element 16 for piercing the protective film to be removed at the mouth of the first container during first use, which is supported by the main body 2 proximate to the first opening 4 and can move along the passage duct 3 between an inactive configuration (Figures 2-5), in which it is accommodated along the duct, and an active configuration (Figures 6-10), in which it protrudes at least partially from the first opening.

Furthermore, there are second means for actuation 17 of the movement of the piercing element 16 between the inactive and active configurations, which are associated externally with the main body 2 and are accessible to an operator.

Advantageously, the first and second actuation means, respectively 15 and 17, are integrated in a single element 18 for rotational actuation about a rotation axis A, which is transverse to the longitudinal extension of the passage duct 3, of a cam 19 that is supported by the main body 2 within the duct and is coupled to a tappet 20 that supports the first flow control element 14 and the piercing element 16.

The tappet 20 can move alternately and longitudinally along the passage duct 3 between a first position (Figures 6-10) in which the piercing element 16 is in the active configuration and the first flow control element 14 is in the open configuration, and a second position (Figures 2-5) in which the piercing element 16 is in the inactive configuration and the first flow control element 14 is in the closed configuration.

In particular, the piercing element 16 and the first flow control element 14 are arranged on opposite sides of the tappet 20, the first being directed toward the first opening 4 and the other toward the second opening 5.

In the embodiment shown, the first flow control element 14 is constituted by a shank that is adapted to be inserted snugly into the second opening 4 thus blocking the flow thereof, thanks in part to the the second sealing ring 13.

The piercing element 16 is constituted by a tubular element that is cut obliquely and is provided with slots 21 into which guide pins for sliding are inserted with play, not visible in the figures, which protrude from the inner wall of the neck 7.

The tappet 20 is constituted by a tubular portion having a substantially elliptical cross-section and arranged with the longitudinal axis parallel to the rotation axis A of the cam 19. In the wall of the tappet there are holes 22 for facilitating the flow of liquid through the passage duct 3.

The cam 19, on the other hand, has a substantially circular cross-section and is arranged inside the tappet 20, the outer diameter of the cam being substantially equal, to the nearest machining tolerances, to the minor axis of the inner cross-section of the tappet 20.

The cam 19 is integral in rotation with a rotation pivot 23 which extends along the rotation axis A and is positioned eccentrically with respect to said cam.

The rotation pivot 23 is arranged with at least one first end 24 protruding from the main body 2 and associated with the actuation element 18 which, in the particular embodiment shown, is constituted by a rotatable handle that is provided with a central profiled ring, which is integrally associated in rotation with the first end 24 of the pivot itself, and with a pair of tabs that protrude from diametrically opposite sides for being gripped by the operator who has to impart the rotation to the rotation pivot 23 through this handle.

There are, furthermore, first elastic means 25 for returning the tappet 20 to the second position.

In the embodiment shown such first elastic means 25 are of the compression type and are constituted by a first helical spring which is arranged along the passage duct 3 outside the piercing element 16 between the supporting body 2 and the tappet 20.

In particular the first spring 25 is positioned between an annular projection 26 that protrudes inside the passage duct 3 proximate to the first opening 4 and the external wall of the tappet 20.

Alternative embodiments are not ruled out in which, for example, such first elastic means are of the traction type and are still positioned between the supporting body 2 and the tappet 20, but proximate to the second opening 5.

Conveniently, the valve 1 has a system for washing the first container once it is emptied, which consists of a third opening 27 that is adapted to be connected to a source for supplying a cleaning liquid, of the type of water, and is connected to a washing duct 28 that terminates at the first opening 4 in order to spray the inner walls of the first container with the cleaning liquid.

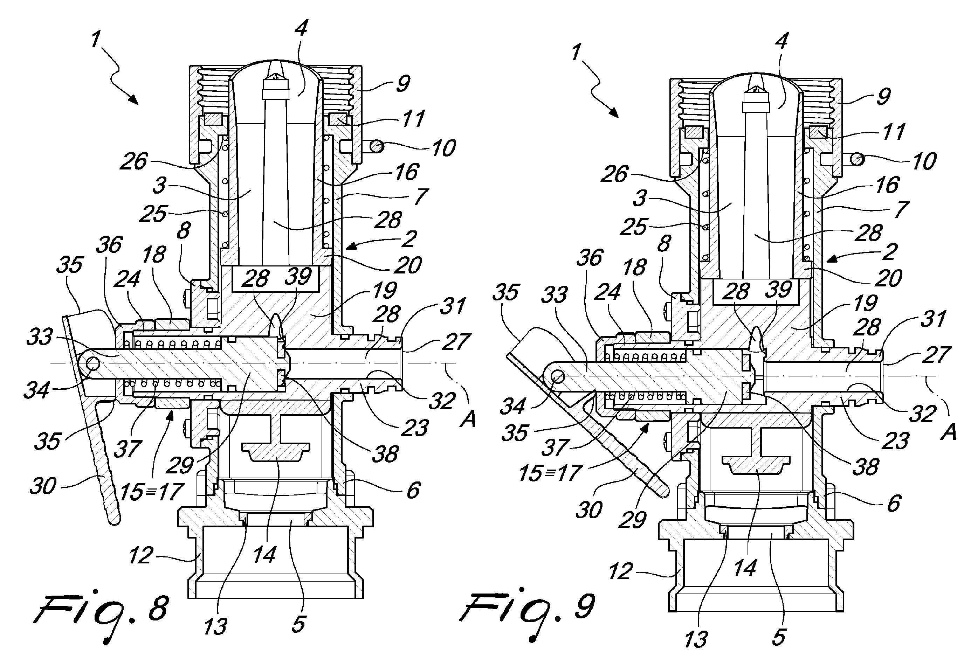

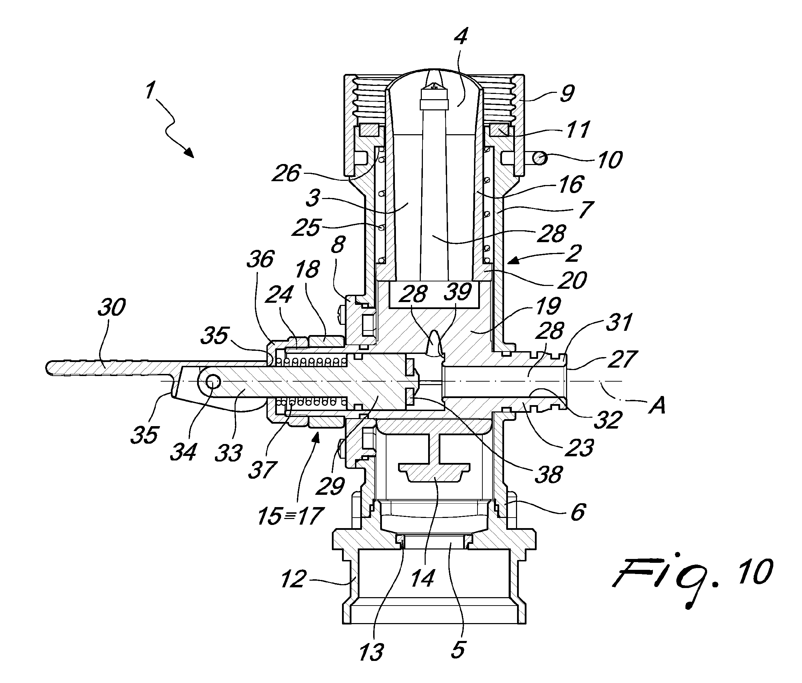

Furthermore, there is a second flow control element 29 for blocking the washing duct 28, which can move alternately between at least one open configuration (Figures 9 and 10) and a closed configuration (Figure 8) in which it allows and prevents, respectively, the flow of liquid through the washing duct 28, and there are third means 30 of actuation of the movement of the second flow control element 29 between the open and closed configurations, which are associated externally with the main body 2 and are accessible by the operator.

In particular, the rotation pivot 23 is positioned with the second end 31 also protruding outside the main body 2 on the side opposite to the first end 24, and is provided with a longitudinal cavity 32 that is open at the second end 31 so as to define the third opening 27.

The washing duct 28 is formed by a first portion that is constituted by a portion of the longitudinal cavity 32, a second portion that passes through the cam 19 in a radial direction with respect to the rotation axis A, and a third portion that is supported inside the passage duct 3. The second and third portions of the washing duct 28 are in mutual fluid communication when the cam 19 is in the angular position that corresponds to the first position of the tappet 20, so that, during washing, the cleaning liquid mixed with the residual product removed from the walls of the first container flows back, through the passage duct 3 that is not intercepted by the first flow control element 14, into the second container and can be reused.

The second flow control element 29 is constituted by a piston that can move along the longitudinal cavity 32 and is integral with a stem 33 that protrudes through the cavity from the first end 24 of the rotation pivot 23 and is associated with the third actuation means 30.

The third actuation means 30 are constituted by a lever that is pivoted at the free end of the stem 33 about a pin 34 perpendicular to the rotation axis A and is provided with at least one abutment surface 35 that interferes with a plug 36 for closing the first end 24 of the rotation pivot 23, from which the free end of said stem protrudes.

The plug 36 also axially couples the ring of the handle 18 to the rotation pivot 23.

During the rotation of the lever 30 actuated by the operator, due to the interference between the abutment surface 35 and the plug 36, the stem 33, integrally with the piston 29, is pulled between the open configuration and the closed configuration.

The piston 29 is normally kept in the closed configuration by second elastic means 37. In this case, when the lever 30 is released the piston 29 ensures the closure of the flow through the washing duct 28, thus preventing backflow of the product contained in the first container through it toward the third opening 27.

Conveniently, the piston 29 has, at the corresponding crown, a third sealing ring 38 on a corresponding seat 39 that is defined along the longitudinal cavity 32 at the connecting region between the first and second portions of the washing duct 28.

In the particular embodiment shown, the second elastic means 37 are of the compression type and are constituted by a helical spring arranged along the longitudinal cavity 32, which is wound around the stem 33 and is interposed between the plug 36 and the piston 29.

However, alternative embodiments are not ruled out in which, for example, the second elastic means are of the traction type and are arranged along the longitudinal cavity 32 between the piston 29 and the third opening 27.

Conveniently there are two abutment surfaces 35 which are differently contoured so that two different open configurations can be obtained of the washing duct 28, one of which is shown in Figure 9 in which the operator has to keep the lever 30 rotated, since at the time of release it tends to spontaneously return to the original closed position under the effect of the reaction of the second spring 37, and the other is shown in Figure 10 in which the lever 30 is wedged against the plug 36 thus keeping the piston 29 in the open configuration in order to obtain a washing jet that continues until the operator releases it thus allowing it to return to the original closed position.

Operation of the present invention is as follows.

When a new first container is opened, the valve 1 is applied with the first opening 4 at the corresponding mouth, from which the removable plug has previously been removed.

The operator furthermore connects the second opening 5 to the second container into which the liquid is to be transferred, and which must be kept at a lower height than the first container.

Thus, by imparting of a rotation to the handle 18, simultaneously the protective film applied on the mouth of the first container is perforated and the passage duct 3 is opened in order to achieve the transfer of the liquid by gravity to the second container.

Once the desired quantity of liquid has been transferred, the handle 18 is brought back to the original closed configuration of the passage duct 3 and the second container can be disconnected from the valve 1 in order for the latter to be used as desired.

At each subsequent transfer a second container is applied to the second opening 5, and the operator acts as described above.

Once the liquid contained in the first container is finished, the container can be washed by actuation of the rotation of the lever 30 into one of the two open configurations in order to spray the cleaning liquid inside the first container by squirting or by a continuous jet.

In practice it has been found that the invention as described achieves the intended aim and objects and, in particular, attention is drawn to the fact that the dosage valve according to the invention makes it possible in a single movement to carry out the perforation of the protective film applied on the mouth of the storage containers and the opening of the valve itself, thus being practical and compact.

Furthermore, the particular structure of the washing system prevents accidental backflow of liquid through the washing duct during the transfer.

The invention, thus conceived, is susceptible of numerous modifications and variations, all of which are within the scope of the appended claims.

Moreover, all the details may be substituted by other, technically equivalent elements.

In practice the materials employed, as well as the contingent dimensions and shapes, may be any according to requirements without for this reason departing from the scope of protection claimed herein.

The disclosures in Italian Patent Application No. MO2013A000032 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A dosage valve (1) for transferring liquids with increased practicality of use, comprising
- a main body (2) that defines a duct (3) for the passage of a liquid to be transferred between a first opening (4), intended to be connected with a fluid connection to the mouth of a first tank for the storage of the liquid and a second opening (5) intended to be connected with a fluid connection to the mouth of a second tank into which said liquid is to be transferred,
- a first flow control element (14) arranged so that it can move along said passage duct (3) between an open configuration and a closed configuration in which it allows and interrupts, respectively, the connection between said first and second openings,
- first means (15) for the actuation of the movement of said first flow control element (14) between said open and closed configurations,
- an element (16) for piercing a protective film applied on the mouth of said first tank, which is supported by said main body (2) proximate to said first opening (4) and can move along said passage duct (3) between an inactive configuration, in which it is accommodated along said duct, and an active configuration, in which it protrudes at least partially from said first opening (4), and
- second means (17) for the actuation of the movement of said piercing element (16) between said inactive and active configurations,
**characterized in that**
said first and second actuation means (15, 17) are integrated in a single element (18) for rotational actuation about a rotation axis (A) that is transverse to the extension of said passage duct (3) of a cam (19) that is supported by said main body (2) within said duct and is coupled to a tappet (20) that supports said first flow control element (14) and said piercing element (16), which can move alternately along said passage duct (3) between a first position, in which said piercing element (16) is in the active configuration and said first flow control element (14) is in the open configuration, and a second position, in which said piercing element (16) is in the inactive configuration and said first flow control element (14) is in the closed configuration.

2. The valve (1) according to claim 1, **characterized in that** said piercing element (16) and said first flow control element (14) are arranged on opposite sides of said tappet (20) along said passage duct (3).

3. The valve (1) according to claim 2, **characterized in that** said first flow control element (14) is constituted by a shank adapted to block said second opening (5).

4. The valve (1) according to one or more of the preceding claims, **characterized in that** said tappet (20) is constituted by a tubular portion having a substantially elliptical cross-section, inside which said cam (19) having a substantially circular shape is arranged, said cam (19) rotating integrally with an eccentric rotation pivot (23) and having at least one first end (24) that protrudes from said main body (2) and is associated with said actuation element (18).

5. The valve (1) according to one or more of the preceding claims, **characterized in that** it comprises first elastic means (25) for the return of said tappet (20) to said second position.

6. The valve (1) according to one or more of the preceding claims, **characterized in that** said actuation element (18) is constituted by a rotatable handle that is provided with a ring that rotates integrally with said rotation pivot (23).

7. The valve (1) according to one or more of the preceding claims, **characterized in that** it comprises a third opening (27) that is adapted to be connected to a source for supplying a washing liquid and is connected to a washing duct (28) that ends proximate to said first opening (4), a second flow control element (29) being also provided for blocking the washing duct (28), which can move alternately between at least one open configuration and one closed configuration, in which it allows and prevents, respectively, the flow of liquid along said washing duct (28), and third means (30) for the actuation of the movement of the second flow control element (29) between said open and closed configurations.

8. The valve (1) according to one or more of the preceding claims, **characterized in that** said rotation pivot (23) is arranged so that a second end (31) protrudes from said main body (2) on the side opposite to said first end (24) and is provided with a longitudinal cavity (32) that is open at the second end (31) so as to define said third opening (27), the washing duct (28) comprising a first portion constituted by at least one portion of said longitudinal cavity (32), a second portion defined so as to pass through said cam (19) in a radial direction with respect to said rotation axis (A), and a third portion that is supported inside the passage duct (3), the second and third portions of the washing duct (28) being mutually connected with a fluid connection when the cam (19) is in the angular position that corresponds to the first position of the tappet (20).

9. The valve (1) according to claim 8, **characterized in that** said second flow control element (29) is accommodated along said longitudinal cavity (32) in the connecting region between the first and second portions of said washing duct (28).

10. The valve (1) according to claim 9, **characterized in that** said second flow control element (29) is constituted by a piston that can move along said longitudinal cavity (32) and is integral with a stem (33) that protrudes through said cavity from the first end (24) of said rotation pivot (23) and is associated with said third actuation means (30).

11. The valve (1) according to claim 10, **characterized in that** said third actuation means (30) comprise a lever that is pivoted to the free end of said stem (33) and is provided with at least one first abutment surface (35) that interferes with a plug (36) for closing the first end (24) of said rotation pivot (23), from which the free end of said stem (33) protrudes in order to move the piston (29) between the open and closed configurations.

12. The valve (1) according to claim 7, **characterized in that** it comprises second elastic means (37) for the return of said second flow control element (29) to the closed configuration.
